# EUROPÄISCHE PATENTSCHRIFT

(11) **EP 0 800 064 B1**
(45) Veröffentlichungstag und Bekanntmachung des Hinweises auf die Patenterteilung: **11.06.2003**
(21) Anmeldenummer: 97103676.9
(22) Anmeldetag: 06.03.1997
(51) Int. Cl.: G01G 3/14, G01L 1/22

(54) **Stabförmige Wägezelle**
Rod-shaped load cell
Capteur de pesage de forme allongée

(30) Priorität: 01.04.1996 DE 19613038
(43) Veröffentlichungstag der Anmeldung: 08.10.1997
(73) Patentinhaber: Hottinger Baldwin Messtechnik GmbH, 64293 Darmstadt (DE)
(72) Erfinder: Bäumel, Helmut, 64291 Darmstadt (DE); Gerlach, Hans Joachim, 64739 Höchst (DE); Will, Heinz Ronald, 64665 Alsbach-Hähnlein (DE)
(74) Vertreter: Behrens, Helmut, Dipl.-Ing.

(56) Entgegenhaltungen:
- EP-A- 0 105 564
- EP-A- 0 319 176
- DE-A- 2 625 888
- DE-U- 8 030 920
- PATENT ABSTRACTS OF JAPAN vol. 013, no. 329 (P-904), 25.Juli 1989 & JP 01 094234 A (KYOWA ELECTRON INSTR CO LTD), 12.April 1989,

## Beschreibung

Die Erfindung betrifft eine Wägezelle oder einen Kraftaufnehmer gemäß Oberbegriff des Patentanspruchs 1.

Aus der EP 0 319 176 ist eine Wägezelle mit einem stabförmig ausgebildeten Meßkörper bekannt, der an seinen stirnseitigen Enden sphärische Krafteinleitungsflächen hat. Auf dem Meßkörper der Wägezelle sind auf gegenüberliegenden Seiten jeweils ein erster Dehnungsaufnehmer zur Messung der Querdehnung und ein zweiter Dehnungsaufnehmer zur Messung der Längsdehnung angeordnet. Die Querdehnungsaufnehmer sowie Längsdehnungsaufnehmer sind dabei jeweils außermittig aber symmetrisch in Bezug auf die Mittelebene zwischen den Krafteinleitungsflächen diagonal versetzt zueinander appliziert. Die Mittelachse der Quer- und Längsdehnungsaufnehmer und die Längsmittelachse des Meßkörpers liegen in einer gemeinsamen Ebene.

Bei einer aus der EP 0 315 846 B1 bekannten Wägezelle der eingangs genannten Art sind die Dehnungsaufnehmer symmetrisch zur Mittelebene zwischen den Mittelpunkten der sphärischen Krafteinleitungsflächen angeordnet. Hierbei können je nach Ausbildung des Meßstabs die Dehnungsaufnehmer entweder in Form eines zu seiner Längsachse symmetrischen Bandes gestaltet sein, das in der genannten Mittelebene um eine zylindrische Mantelfläche herumgelegt wird, oder es können bei einem Meßstab von quadratischem Querschnitt auf den vier Flächen symmetrisch zu der genannten Mittelebene jeweils als Halbbrücke oder als Vollbrücke gestaltete Anordnungen von Dehnungsmeßstreifen angebracht werden. Für beide Anordnungen wird als wesentlich erachtet, daß die Dehnungsaufnehmer sowohl symmetrisch zur Längsachse als auch symmetrisch zur Mittelebene zwischen den Mittelpunkten der Krafteinleitungsflächen positioniert sind, um Meßfehler durch eine dezentrale Krafteinleitung zu vermeiden. Bei einem Meßstab von quadratischem Querschnitt bedeutet dies, daß die auf den einzelnen Flächen zu applizierenden Dehnungsaufnehmer in Bezug auf zwei zueinander senkrechte Achsen symmetrisch gestaltet sein müssen und beide Achsen genau zu den Symmetrieebenen bzw. der Mittelebene des Meßstabs ausgerichtet werden müssen. Sowohl die Herstellung der geeigneten Dehnungsaufnehmer als auch die genaue Applikation der Dehnungsaufnehmer auf dem Meßstab sind bei der bekannten Wägezelle daher aufwendig und teuer.

Der Erfindung liegt die Aufgabe zugrunde, dem Banaufwand und damit die Herstellungskosten einer Wägezelle der eingangs genannte Art zu verringerns, ohne daß dies mit Einbußen an der Meßgenauigkeit verbunden ist.

Die Aufgabe wird durch die im Patentanspruch 1 angegebenen Merkmale gelöst.

Vorteilhaft ist der Meßkörper nach der Anbringung der Dehnungsaufnehmer zur Beseitigung von Unsymmetrien und Ungleichförmigkeiten mechanisch durch Materialabtrag und/oder elektrisch abgeglichen.

Bei der erfindungsgemäß Wägezelle wird auf eine den Meßkörper vollständig umgebende oder zumindest in einem Winkelabstand von 90° vorgesehene Anordnung von Dehnungsaufnehmern verzichtet, ebenso wie auf eine symmetrische Anordnung der Dehnungsaufnehmer in Bezug auf ein Zentrum symmetrischer Spannungen. Es wird bei einer auf zwei Applikationsstellen reduzierten und zumindest teilweise außermittigen Anordnung von Dehnungsaufnehmern beispielsweise mechanisch durch geeigneten Materialabtrag oder elektrisch der Meßkörper im Sinne einer Symmetrierung seines Meßverhaltens abgeglichen, und dadurch insgesamt ein ausgewogenes Meßverhalten auch in Bezug auf zur Längsachse geneigte Krafteinleitungen und eine hohe Meßgenauigkeit erzielt.

Die erfindungsgemäße Wägezelle zeichnet sich durch eine Reihe von Vorteilen aus. Der Applikationsaufwand ist bezüglich Material- und Zeitaufwand gering, da nur an zwei einander entgegengesetzten Flächen des Meßkörpers Dehnungsaufnehmer zu applizieren sind. Dies kann in einem Arbeitsgang erfolgen. Der Abgleich des Meßkörpers ist, beispielsweise nach dem in der Patentanmeldung DE-A-44 16 442.4 beschriebenen Rotationsabgleich-Verfahren, einfach durchführbar.

Erfindungsgemäß kann weiterhin vorgesehen sein, daß die Dehnungsaufnehmer einer Halbbrücke auf einem gemeinsamen Träger angeordnet sind. Hierdurch wird der Verschaltungsaufwand reduziert, da die Halbbrücken auf dem Träger bereits intern verschaltet sind. Die Herstellkosten der Halbbrücken-Dehnungsaufnehmer sind bei einer einteiligen Ausführung niedrig. Weiterhin wird hierdurch eine hohe Genauigkeit in der Lage der in Längs- und Querrichtung messenden Dehnungsaufnehmer zueinander erzielt und die Applikation der Dehnungsaufnehmer zusätzlich vereinfacht. Auch verbessert der gemeinsame Träger das Verhalten gegenüber Temperaturempfindlichkeit, da die Längs- und Queraufnehmer zwangsläufig aus benachbarten Folienabschnitten bestehen und somit im Temperaturkoeffizient gleichläufig sind.

Der Applikations- und Verschaltungsaufwand kann erfindungsgemäß weiterhin dadurch kleingehalten werden, daß jede Halbbrücke nur mit einem Kompensationselement zur Linearisierung bzw. Temperaturkompensation verbunden ist oder daß insgesamt jeweils nur mit einem Kompensationselement zur Linearisierung bzw. Temperaturkompensation gearbeitet wird.

Weiterhin können erfindungsgemäß auf einem zentralen, zwischen den Dehnungsaufnehmern an dem Meßkörper angebrachten Träger, beispielsweise in Form einer Folienleiterplatte oder einer flexiblen Schaltplatine, die ergänzende Schaltung und Anschlußflächen für die Dehnungsaufnehmer, die Kompensationselemente und Anschlußkabel zu Geräten für die Verarbeitung und Auswertung der Meßsignale vorgesehen sein. Ferner können auf dem Träger die zu einem elektrischen Abgleich nach der Patentanmeldung DE-A-44 16 442.4 erforderlichen Elemente vorgesehen werden. Die Herstellung wird dadurch vereinfacht und Unsymmetrien werden vermieden.

Die Erfindung wird nachfolgend anhand eines Ausführungsbeispiels näher erläutert, das in der Zeichnung dargestellt ist. Es zeigen
- Figur 1: eine Ansicht einer erfindungsgemäßen Wägezelle,
- Figur 2: eine Abwicklung der Applikationsflächen der Wägezelle gemäß Figur 1 mit den darauf angebrachten Bauelementen,
- Figur 3: einen Schaltplan der Meßbrücke der dargestellten Wägezelle

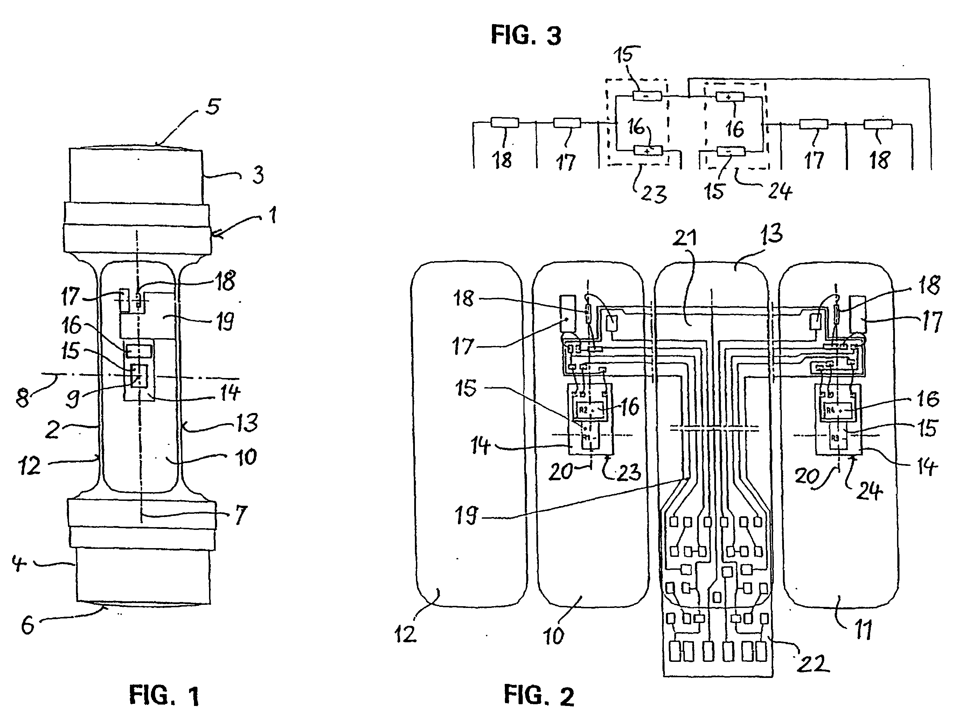

Die in Figur 1 dargestellte Wägezelle besteht aus einem als Druckstab ausgebildeten Meßkörper 1, der einen schlanken mittigen Meßabschnitt 2 mit quadratischem Querschnitt und abgestufte, zylindrische Endabschnitte 3, 4 aufweist. Der Meßabschnitt 2 kann jedoch auch einen kreisförmigen oder vieleckigen Querschnitt aufweisen. Die Stirnseiten der Endabschnitte 3, 4 haben sphärische Krafteinleitungsflächen 5, 6, deren Mittelpunkte auf der zentralen Längsachse 7 liegen und die den gleichen Radius haben. Einer oder beide der Endabschnitte 3, 4 können stattdessen auch ebene Krafteinleitungsflächen haben und/oder es können an den Endabschnitten Einrichtungen zur Verbindung mit Krafteinleitungsbauteilen, beispielsweise Gewinde oder Querbohrungen vorgesehen sein. Der Meßkörper 1 ist in mehrfacher Hinsicht symmetrisch ausgebildet. Symmetrieachsen sind die Längsachse 7 und zwei die Längsachse 7 in der Mitte zwischen den Krafteinleitungsflächen 5, 6 senkrecht kreuzende und zu den Flächen des Meßabschnitts 2 senkrechte Achsen 8, 9. Die in Figur 1 sichtbare vordere Fläche des Meßabschnitts 2 ist mit 10, die dieser entgegengesetzte rückseitige Fläche mit 11 und die beiden zu den Flächen 10, 11 senkrechten Flächen sind mit 12, 13 bezeichnet.

Auf den Flächen 10 und 11 sind wie aus Figur 2 zu ersehen, in symmetrischer Anordnung jeweils ein Träger 14 mit Dehnungsaufnehmern 15, 16, ein E-Modul-Kompensationselement 17, ein Linearisierungselement 18 und die Enden einer Leiterfolie 19 angebracht. Der Träger 14 mit den Dehnungsaufnehmern 15, 16 ist üblicherweise ein Folien-Dehnungsmeßstreifen mit zwei auf einer Trägerfolie angeordneten Meßgittern. Die Dehnungsaufnehmer 15, 16 sind jeweils zu einer Mittelachse 20 zentriert auf dem Träger 14 angeordnet und die Träger 14 sind so auf den Flächen 10, 11 appliziert, daß die Mittelachsen 20 in einer gemeinsamen durch die Längsachse 7 gehenden Ebene liegen. In Längsrichtung werden die Träger 14 auf den Flächen 10, 11 so positioniert, daß die für die Messung der Längsdehnung ausgelegten Dehnungsaufnehmer 15 in Bezug auf die durch die Achsen 8, 9 definierte Mittelebene zentriert sind. Die Dehungsaufnehmer 16, die die Querdehnung des Meßkörpers 1 erfassen, sind dementsprechend außerhalb der durch die Achsen 8, 9 definierten Mittelebene angeordnet. Nicht dargestellt ist eine Ausführungsform, bei der das Zentrum der die Längsdehnung erfassenden Dehnungsaufnehmer ebenfalls außerhalb der durch die Achsen 8, 9 definierten Mittelebene liegt. Die Dehnungsaufnehmer 15, 16, die E-Modul-Kompensationselemente 17 und die Linearisierungselmente 18 sind durch flexible Anschlußbändchen in üblicher Weise mit Anschlußflächen in einem Kopfbereich 21 der Leiterfolien 19 verbunden. Der Kopfbereich 21 erstreckt sich von der Fläche 10 über die Fläche 13 bis zur Fläche 11 und ist auf den Flächen 10, 13, 11 befestigt. Weitere Kompensationselemente sind in einem Bereich 22 der Leiterfolie 19 angeordnet, der flexibel gestaltet ist. Die Verschaltung der Dehnungsaufnehmer 15, 16, der E-Modul-Kompensationselemente 17 und der Linearisierungselemente 18 zu einer Meßbrücke ist in Figur 3 gezeigt. Bei dem dargestellten Beispiel sind beide Halbbrücken 23, 24 jeweils an ein E-Modul-Kompensationselement 17 und ein Linearisierungselement 18 angeschlossen. Die erforderliche Linearisierung und Kompensation kann jedoch auch mit nur einem Linearisierungselement 18 und einem E-Modul-Kompensationselement 17 erreicht werden.

Nach Herstellung der beschriebenen Wägezelle wird ein beispielsweise mechanischer Abgleich des Meßkörpers 1 durchgeführt. Hierzu wird der Meßkörper 1 an einem Endabschnitt 3 bzw 4 eingespannt und an seinem anderen Endabschnitt 4 bzw. 3 radial zur Längsachse 7 in den beiden Diagonalebenen des Meßabschnitts 2 jeweils in einer und anschließend in der entgegengesetzten Richtung belastet und zu jeder Belastung das Ausgangssignal der Meßbrücke erfaßt. Liegt der Betrag aller Ausgangssignale innerhalb einer Toleranzgrenze, so ist ein Abgleich des Meßkörpers nicht erforderlich. Überschreiten einzelne Ausgangssignale den Toleranzbereich, so wird ein Abgleich durch Abtragung von Material an den Längskanten des Meßabschnitts 2 des Meßkörpers 1 durchgeführt, wobei die Menge des jeweils abzutragenden Materials von der Größe des jeweiligen Ausgangssignals abhängt. Statt eines mechanischen Abgleichs kann der Abgleich auch elektrisch über Abgleichwiderstände erfolgen. Es können auch beide Abgleichverfahren gemeinsam zum Einsatz kommen. Nach der Durchführung eines solchen Abgleichs, wie er im einzelnen in der deutschen Patentanmeldung DE-A-44 16 442 beschrieben ist, ist ein rotationssymmetrisches Verhalten des Meßkörpers innerhalb vorgegebener Toleranzgrenzen und eine entsprechende Unempfindlichkeit gegenüber schräger Krafteinleitung gegeben.

## Patentansprüche

1. Wägezelle oder Kraftaufnehmer mit einem stabförmig ausgebildeten Meßkörper (1), der an seinen stirnseitigen Enden (3,4) vorzugsweise sphärische Krafteinleitungsflächen (5,6) hat, und mit auf dem Meßkörper (1) zwischen den Krafteinleitungsflächen (5,6) angebrachten Dehnungsaufnehmern (15,16), die als Wheatstonesche Brücke geschaltet sind, wobei auf zwei einander entgegengesetzten Seiten des Meßkörpers (1) zwei, jeweils eine Halbbrücke (23, 24) bildende Dehnungsaufnehmer (15, 16) zur Messung der Längs- und Querdehnung derart angeordnet sind, daß die Längsmittelachse (7) des Meßkörpers (1) und die Mittelachsen der Dehnungsaufnehmer (15, 16) der Halbbrücke (23, 24) in einer gemeinsamen Ebene liegen und wobei zumindest ein Dehnungsaufnehmer der Halbbrücken (23, 24) außermittig in Bezug auf die Mittelebene zwischen den Krafteinleitungsflächen (5, 6) angeordnet ist, **dadurch gekennzeichnet, daß** die Dehnungsaufnehmer (15) zur Messung der Längsdehnung mittig zwischen den Krafteinleitungsflächen (5, 6) angeordnet sind und die Dehnungsaufnehmer (16) zur Messung der Querdehnung außermittig in Bezug auf die Mittelebene zwischen den Krafteinleitungsflächen (5, 6) angeordnet sind.

2. Wägezelle oder Kraftaufnehmer nach Anspruch 1, **dadurch gekennzeichnet, daß** der Meßkörper (1) nach der Anbringung der Dehnungsaufnehmer (15, 16) zur Beseitigung von Unsymmetrien und Ungleichförmigkeiten mechanisch durch Materialabtrag und/oder elektrisch abgeglichen ist.

3. Wägezelle oder Kraftaufnehmer nach einem der vorhergehenden Ansprüche, **dadurch gekennzeichnet, daß** die Dehnungsaufnehmer einer Halbbrücke auf einem gemeinsamen Träger angeordnet sind.

4. Wägezelle oder Kraftaufnehmer nach einem der vorhergehenden Ansprüche, **dadurch gekennzeichnet, daß** die beiden Halbbrücken (23, 24) nur mit einem, beiden Halbbrücken zugeordneten Kompensationselement (17 bzw. 18) zur Linearisierung bzw. Temperaturkompensation verbunden sind.

5. Wägezelle oder Kraftaufnehmer nach einem der vorhergehenden Ansprüche, **dadurch gekennzeichnet, daß** auf einem zentralen, zwischen den Dehnungsaufnehmern (15, 16) an dem Meßkörper (1) angebrachten Träger (19) ergänzende Schaltungen und Anschlußflächen für die Dehnungsaufnehmer (15, 16), die Kompensationselemente (17, 18), weitere Kompensations- und Abgleichelemente sowie Anschlußflächen für Anschlußkabel vorgesehen sind.

6. Wägezelle oder Kraftaufnehmer nach einem der vorhergehenden Ansprüche, **dadurch gekennzeichnet, daß** der Meßabschnitt (2) des Meßkörpers (1) einen verringerten, vorzugsweise quadratischen, Querschnitt hat.

7. Wägezelle oder Kraftaufnehmer nach einem der vorhergehenden Ansprüche, **dadurch gekennzeichnet, daß** der Radius der Krafteinleitungsflächen (5,6) gleich ist.

## Claims

1. A load cell or force transducer incorporating a bar-shaped measuring body (1) which preferably has spherical force introducing surfaces (5, 6) at the end faces (3, 4) thereof, and incorporating extensometers (15, 16) which are connected up to form a Wheatstone bridge and mounted on the measuring body (1) between the force introducing surfaces (5, 6), wherein two extensometers (15, 16) each forming a half-bridge (23, 24) for the purposes of respectively measuring the longitudinal and transverse expansions are arranged on two mutually opposite sides of the measuring body (1) in such a manner that the longitudinal central axis (7) of the measuring body (1) and the central axes of the extensometers (15, 16) of the half-bridges (23, 24) will lie in a common plane, and wherein at least one extensometer in the two half-bridges (23, 24) is arranged such that it is off-centre with respect to the central plane between the force introducing surfaces (5, 6), **characterised in that** the extensometers (15) for measuring the longitudinal expansion are arranged mid-way between the force introducing surfaces (5, 6) and the extensometers (16) for measuring the transverse expansion are arranged off-centre with respect to the central plane between the force introducing surfaces (5, 6).

2. A load cell or force transducer in accordance with Claim 1, **characterised in that**, after the extensometers (15, 16) have been mounted thereon, the measuring body (1) is balanced mechanically by removing material and/or is balanced electrically for the purposes of eliminating irregularities and lack of symmetry.

3. A load cell or force transducer in accordance with any of the preceding Claims, **characterised in that** the extensometers of a half-bridge are arranged on a common support member.

4. A load cell or force transducer in accordance with any of the preceding Claims, **characterised in that** the two half-bridges (23, 24) are only connected to one compensating element (17 or 18) that is associated with both half-bridges for linearising or temperature compensation purposes

5. A load cell or force transducer in accordance with any of the preceding Claims, **characterised in that** supplementary circuits and terminal surfaces for the extensometers (15, 16), the compensating elements (17, 18), further compensating and balancing elements and also terminal surfaces for terminating cables are provided on a central support member (19) that is mounted on the measuring body (1) between the extensometers (15, 16).

6. A load cell or force transducer in accordance with any of the preceding Claims, **characterised in that** the measuring section (2) of the measuring body (1) has a reduced, preferably square cross-section.

7. A load cell or force transducer in accordance with any of the preceding Claims, **characterised in that** the radii of the force introducing surfaces (5, 6) are the same.

## Revendications

1. Cellule de pesée ou capteur de force comportant un corps de mesure (1) en forme de barre qui possède, à ses extrémités frontales (3, 4), de préférence des surfaces d'introduction de forces (5, 6) sphériques, et comportant des jauges d'allongement (1 5, 16) placées sur le corps de mesure (1) entre les surfaces d'introduction des forces (5, 6), qui sont montées à la manière d'un pont de Wheatstone, deux jauges d'allongement (15, 16), formant chacune un demi-pont (23, 24), étant disposées sur deux côtés opposés l'un à l'autre du corps de mesure (1) pour mesurer l'allongement longitudinal et transversal, de manière que l'axe médian longitudinal (7) du corps de mesure (1) et les axes médians des jauges d'allongement (15, 16) du demi-pont (23, 24) se situent dans un plan commun, et au moins une jauge d'allongement des demi-ponts (23, 24) étant disposée de manière excentrée par rapport au plan médian entre les surfaces d'introduction des forces (5, 6), **caractérisé en ce que** les jauges d'allongement (15) pour la mesure de l'allongement longitudinal sont disposées au milieu entre les surfaces d'introduction des forces (5, 6), et les jauges d'allongement (16) pour la mesure de l'allongement transversal sont disposées de manière excentrée par rapport au plan médian entre les surfaces d'introduction des forces (5, 6).

2. Cellule de pesée ou capteur de force selon la revendication 1, **caractérisé en ce qu'**après la mise en place des jauges d'allongement (15, 16), le corps de mesure (1) est équilibré mécaniquement par enlèvement de matière et/ou électriquement, pour éliminer des asymétries et des irrégularités.

3. Cellule de pesée ou capteur de force selon l'une des revendications précédentes, **caractérisé en ce que** les jauges d'allongement d'un demi-pont sont disposées sur un support commun.

4. Cellule de pesée ou capteur de force selon l'une des revendications précédentes, **caractérisé en ce que** les deux demi-ponts (23, 24) sont reliés uniquement à un élément de compensation (17 ou 18), associé aux deux demi-ponts, pour la linéarisation ou la compensation de la température.

5. Cellule de pesée ou capteur de force selon l'une des revendications précédentes, **caractérisé en ce que** des circuits complémentaires et des surfaces de connexion pour les jauges d'allongement (15, 16), les éléments de compensation (17, 18), d'autres éléments de compensation et d'équilibrage ainsi que des surfaces de connexion pour des câbles de connexion sont prévus sur un support (19) central, placé entre les jauges d'allongement (15, 16) sur le corps de mesure (1).

6. Cellule de pesée ou capteur de force selon l'une des revendications précédentes, **caractérisé en ce que** le tronçon de mesure (2) du corps de mesure (1) présente une section transversale réduite, de préférence carrée.

7. Cellule de pesée ou capteur de force selon l'une des revendications précédentes, **caractérisé en ce que** les surfaces d'introduction des forces (5, 6) ont le même rayon.
